# EUROPEAN PATENT APPLICATION

(11) **EP 1 972 667 A1**
(43) Date of publication of application: **24.09.2008**
(21) Application number: 08005501.5
(22) Date of filing: 25.03.2008
(51) Int. Cl.: C09D 11/00

(54) **Ink compositions and printing methods for high readability on various types of substrates**

(30) Priority: 22.03.2007 US 728063
(71) Applicant: PITNEY BOWES INC., Stamford CT 06926-0700 (US)
(72) Inventor: Auslander, Judith D., Connecticut 06880 (US); Bernard, Richard A., Norwalk Connecticut 06850 (US); Chen, Mike Y.R., East Longmeadow Massachusetts 01028 (US); Higashiyama, Shunichi, Yokkaichi Mie-ken, 510-0811 (JP); Taniguchi, Akihiko, Kakamigahara Gifu 504-0012 (JP); Sago, Hiromitsu, Tokai Aichi 476-0003 (JP); Nakamura, Atsushi, Nagoya Aichi 467-0827 (JP)
(74) Representative: HOFFMANN EITLE

(57) **Abstract**

New blue inks are provided for inkjet printing, especially using piezoelectric printers, on papers which are typically difficult to print with good quality, high-contrast images. The inks are characterized by a color of the ink (color illumination D65) of L*: about 37±5, a*: about 7±7, b*: about -27±8. The inks contain an aqueous vehicle including water and a humectant comprising a polyhydric alcohol, a penetrant, surfactant, and a blue dye. The relative amounts of the aqueous vehicle, the penetrant, the surfactant and the blue dye, are effective to provide an ink having a viscosity and surface tension effective for inkjet printing, especially for piezoelectric printing, having a viscosity of from about 2 to about 4 mPa·s and a surface tension of from 30 to 50 mN/m. Also provided are a process for printing an image and a printed image prepared using the ink.

## Description

The present invention relates to new inks for inkjet printing, especially blue inks suitable for inkjet printing, preferably using piezoelectric printers, on papers which are typically difficult to print with good quality, high-contrast images.

Postal operators worldwide use two-dimensional Data Matrix bar codes for postage payment evidencing. Dynamic interaction of inkjet inks with uncontrolled media like envelope papers generates a variety of print quality defects. Both ink and paper characteristics are relevant to defects due to variations in wetting and capillarity characteristics.

Several posts have introduced postage evidencing systems using a Digital Postage Mark (DPM) containing machine-readable information printed on the upper right corner of the address on a mail piece. Posts need to reliably read the DPM printed by the mailer as postage payment evidence. Readability becomes a "must" for service reliability with the inclusion of track-and-trace, delivery confirmation and other value-added services in the DPM. Posts and meter manufacturers jointly face the challenge of achieving highly reliable machine reading of the DPM. The Post prefers not to hand feed any mail for economical reasons, and meter manufacturers require acceptance of their imprints for the Post to approve the postage meter.

Digital Postage Marks are often printed by ink jet at high speed, resulting in errors. The use of uncontrolled envelope media further reduces print quality. The average reflectance of the mailer-selected envelope has an immediate impact on the contrast. The variation in reflectance of the envelope due to background haze and specks introduces additional noise. The interaction between the paper and ink contributes to a range of print quality attributes including print growth, mottle, graininess, edge raggedness and blurriness as defined in *International Standard ISO*/*IEC 13660 Information technology - Office equipment-Measurement of image quality attributes for hardcopy output - Binary monochrome text and graphic images.*

Postal scanners are designed to operate efficiently in postal sorters and other automation equipment. Sorters divide an input mailstream into multiple output channels based on information in the address. The sorter may operate at a speed of 36,000 mail pieces per hour or higher. Imaging systems operating at such high speeds invariably introduce noise. Manufacturers of postal automation equipment are challenged to continually improve scanning systems to accurately recognize addresses with low print quality and low-contrast on dark envelopes.

The goal of automating the verification of franking marks, importantly of the revenue protection block, presents challenges with required read rates of 98% and more. Among key factors contributing to the print quality are the color and contrast, which are crucial in grade determination according to most standards (AIM, ISO, *etc.),* and the modulation which is defined as the ratio between the edge contrast and the symbol contrast. The modulation is strongly influenced by the print growth. The print growth is a result of the ink/paper interaction which can differ significantly from paper to paper and from ink to ink. In general, the image quality will depend on characteristics for the papers such as porosity, degree of hydrophobicity, sizing, fiber type, critical surface energy, and the like.

Some post systems require a particular color ink, but permit a range of colors of envelopes not limited to white or light colors. For example, the German Post is requiring blue inks, but permits wide latitude in paper color and characteristics. There is a need to provide improvements in blue inks for postal uses utilizing DPMs, especially for use with piezoelectric inject printers, to achieve good quality, high-contrast images on papers which are typically difficult to print to the high standards necessary.

Typically, inkjet inks for desktop use are formulated to print on cut sheet paper (plain paper) where a reasonably good print quality can be achieved. These inks show an excessive degree of lateral spreading on non porous and highly porous envelopes. However, to achieve effective use of DPM in high-speed equipment, good image quality with high contrast is essential on a variety of papers, ranging from non porous (such as glass paper) to coated and to highly porous (as recycled).

Another factor in image quality is the type of print mechanism, with inkjet printers requiring demanding specifications. In general, ink jet printers function by spraying drops of ink directly on the paper. The dots are extremely small (usually between 50 and 60 microns in diameter), and they are positioned very precisely, with resolutions of up to 1440x720 dots per inch (dpi). Piezoelectric printers employ piezoelectric crystal elements to expel ink from ink reservoir and through a nozzle. The piezoelectric crystal element is caused to vibrate by application of electric charges. When the crystal moves in one direction, it forces a tiny amount of ink out of the nozzle; and in the other, it pulls some more ink into the reservoir to replace the ink ejected. Physical properties must be precisely controlled to obtain the correct ink pattern formation, and the chemical and physical properties must be effectively balanced to give the printed image the quality and contrast necessary for the demanding task of DPM imaging.

The blue inks presently available for piezoelectric printing cannot print good quality, high-contrast images on all types of paper. Notable problems have been experienced with blue inks required for the German Post (Deutsche Post) to meet quality and contrast requirements on all of German Post's standard envelope numbers 1 through 17. In particular, envelope numbers 5 and 14 through 17 have been problematical.

The use of ink additives has provided some relief in the past for some of the problems with printing on diverse substrates; however, the ability of inks to penetrate has often caused them to spread too much. The limitation of spreading has often made it difficult to provide an image which gives a continuous tone where individual ink droplets stand alone on a white background. Some additives used to enhance penetration have also been found incompatible with rubber or polymeric print head parts. Decreasing surface tension has often caused excessive spread. Ink formulation is not fully predictable and combinations often act differently than would be expected where one additive is added to achieve a desired effect. Surface tension, chemical solvency, viscosity and individual component vapor pressures are all important to success, and they can all change by varying one component of a combination. The needs for functionality of the various additives are largely at odds with one another.

There is a present need for new piezoelectric inkjet inks for printing on a wide range of substrates, especially blue inks which provide good quality, high-contrast images on papers which are typically difficult to print with acceptable quality.

The invention provides new blue inkjet inks and methods of using them to provide good quality, high-contrast images on a wide range of substrates, especially on papers which are typically difficult to print with acceptable quality and contrast and especially by piezoelectric inkjet printing.

In one aspect, the invention provides a blue inkjet ink, characterized by a color of the ink (color illumination D65) of L*: about 37±5, a*: about 7±7, b*: about -27±8, and suitable for inkjet printing, comprising: an aqueous vehicle including water and a humectant comprising a polyhydric alcohol, a penetrant, surfactant, and a blue dye, wherein the relative amounts of the aqueous vehicle, the penetrant, the surfactant and the blue dye, are effective to provide an ink having a viscosity and surface tension suitable for inkjet printing, especially by piezoelectric printing with a viscosity of from about 2 to about 4 mPa·s and a surface tension of from about 30 to about 50 mN/m.

In another aspect, the invention provides a process for printing images with blue inkjet ink using inkjet printing, comprising: providing a inkjet printer, especially a piezoelectric printer, charged with the ink above, and printing an image.

In yet another aspect, the invention provides printed images using the inks as described.

Other preferred and alternative aspects of the invention will be described below.

The inks of the invention are blue, characterized by a blue color defined as L*: about 37±5, a*: about 7±7, b*: about -27±8, under the test described below, and based on soluble dyes and formulated for printing by inkjet printer, especially piezoelectric printing, on a wide range of substrates. The inks provide good quality, high-contrast images on papers which are typically difficult to print with acceptable quality.

Table 1 below shows the variation in physical properties in envelopes specified by the German Post. To determine the physical properties of the envelopes to help in analyzing how they would receive inks, we analyzed each for smoothness, porosity and Cobb sizing.

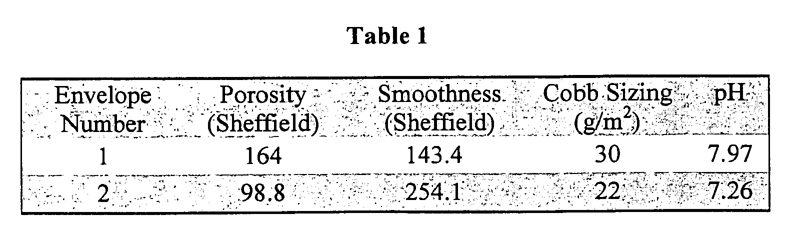

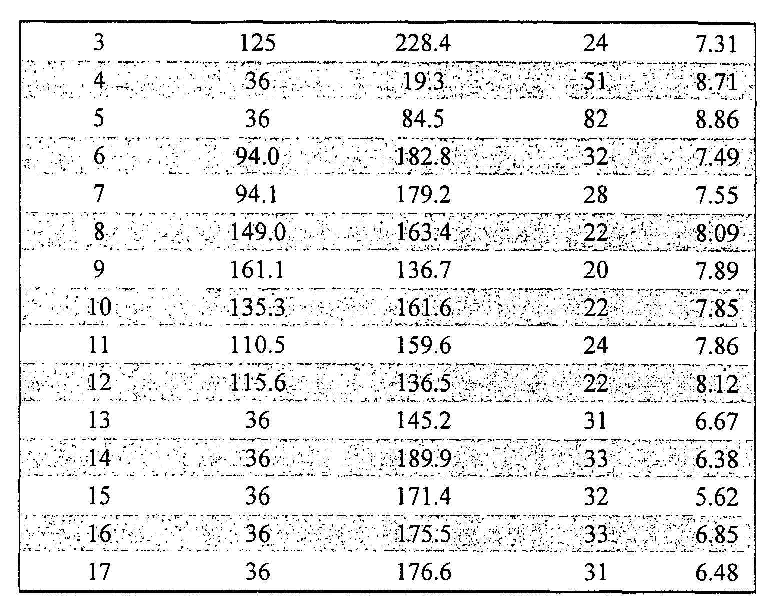

The Envelopes were conditioned at 23°C and 50% RH 24 hours before testing. The smoothness and porosity measurements were made with a TMI Monitor Smoothness Model 58-02 machine, with the minimum value for porosity is 36 SU for this instrument, indicating a very porous substrate. The Cobb sizing test was performed according to TAPPI 441 om-98 using a Curley Precision Instrument.

We can see from these table that the envelopes belong to several categories according to their porosity, surface roughness and hydrophilicity (Cobb sizing). Envelopes 4, 5 and 13 to 17 have very low porosity and 2, 6, 7 at a lower extent. From the other side the envelopes 2 and 3 exhibit as high surface roughness. The pergamyn envelopes 13 to 17 have the unusual combination of very low porosity and high roughness which always encourages print growth for fast drying inks. The two envelopes 4 and 5 are coated, therefore smooth, but with low porosity. The envelope 5 is much more hydrophilic and therefore will encourage print growth for water based inks. In conclusion, without the significant advance of the invention, it will be almost impossible to achieve good print quality on this broad spectrum of envelopes with so diverse characteristics.

The inks will comprise an aqueous vehicle including water and a humectant comprising a polyhydric alcohol, penetrant, preferably a glycol ether selected from the group consisting of ethers based on ethylene glycol and ethers based on propylene glycol, at least one surfactant, and Acid blue 9. The relative amounts of the aqueous vehicle, the penetrant, surfactant and the Acid blue 9, are effective to provide an ink having viscosity, surface tension and other physical properties suitable for piezoelectric inkjet printing. The viscosity of the liquid ink jet inks is typically from 1.5 to 15 mPa·s in current piezoelectric ink jet printers and about 1 to 5 mPa·s in thermal ink jet printers. Preferably, the viscosity will be within the range of from about 2 to about 4 mPa·s, *e.g.*, from about 2.9 to about 3.6 mPa·s, as measured at 25°C using a Brookfield rotary viscometer (Model: DV-II+). Desirably, the surface tension will preferably be within the range of from about 30 to about 50 mN/m, e.g., from about 32 to about 39 mN/m, as measured at 25°C using a surface tensiometer (Model : CBVP-Z) produced by Kyowa Interface Science. Densities will desirably be within the range of from about 1.05 to about 1.10 g/cm³, and preferably will be within the range of from about 1.065 to about 1.085 g/cm³, as measured at 25°C. Conductivities are desirably within the range of from about 1.0 to about 3.0 mS/cm, e.g., from about 1.5 to about 2.5 mS/cm, as measured at 25°C using a conductivity meter (Model: F-54) produced by HORIBA. Because the inks of the invention have shown such good results with piezoelectric printers, they have been described primarily in this context. It is, however, possible with some variation in formulation, to formulate the inks of the invention for thermal (e.g., bubble type) inkjet printers. For these inks, the viscosity should be within the range of from 1 to 5 mPa-s, preferably from 2 to 4 mPa·s, and exhibit a surface tension of from 20 to about 80 mN/m, preferably from 30 to 50 mN/m.

The inks will comprise a blue dye, preferably Acid blue 9 and also preferably comprise a black die and a red dye, the dyes being present in proportions and type to provide a blue color defined as blue by colorimetric spectrometer (e.g., SC-T produced by Suga Test Instruments), i.e., (color illumination D65) is L*: about 37±5, a*: about 7±7, b*: about -27±8. According to CIE (International Commission on Illumination) standards established in 1964. The L* value is a measure of light and dark, while the a* and b* values are a measure of the color, a* extending from negative values for green to positive values for red, and b* extending from negative values for blue to positive values for yellow. White or neutral color for the individual components would be represented by a* = 0 and b* = 0, with the color shifting from gray to black as the L* value decreases. Other blue dies can be employed in partial or full substitution of the Acid blue 9 where it remains possible to achieve the color, contrast and quality as achieved for the Acid blue 9 formulations. The inks of the invention are characterized by a blue color, and a formulation that permits piezoelectric inkjet printing high-quality images having high-contrast on a variety of print substrates. The test protocol for the L*, a*, b* color determination is described as follows: (1) A test pattern is formed having a solid square area of 18x18mm was printed on envelope 1 shown in Table 1 using a Pitney Bowes Mailstation^{™} Digital Postage Meter. (2) Then, the L*,a*,b* of the solid square area was measured by a colorimetric spectrometer (Model : SC-T, color illumination D65) produced by Suga Test Instruments.

The foundation of color for the blue inks of the invention is an effective blue dye, preferably Acid blue 9. In preferred embodiments, the color is strengthened to improve contrast and light-fastness properties without diminishing its characteristic blue color by adding black and or other, e.g., red dyes. Among the black dyes suitable for use in the inks of the invention are mono-azo dyes (such as Color Index Number Acid Black 2, 7, 24, 26, 31, 52, 63, 112 and 118), di-azo dyes and tri-azo dyes. Among the red dyes are Color Index Number Acid Red 1, 6, 32, 37, 51, 52, 80, 85, 87, 92, 94, 115, 181, 256, 289, 315 and 317. With the blue dye, the combination will provide the noted blue color as defined above. In a preferred formulation, the black dye will comprise, for example, MA397 (produced by Mitsubishi Chemical), the red dye will comprise, for example, Acid red 52, and the ratio of blue to red to black dyes will be within the ranges of from about 100:40:20 to about 100:75:60, with a ratio of a preferred embodiment being about 85: about 56: about 35. In some cases, pigments can be employed, but the use of such is not preferred. The total amount of dye will be effective to provide the color noted above and effectively provide quality images with suitably high contrast. Typically, the inks will contain at least about 2% dye, and preferably from about 3 to about 6%. It has been found that increasing the dye concentration to the upper portion of the ranges above will reduce the tendency of the solvents to attack rubber, plastic and other sensitive parts. Accordingly, dye concentrations of about 3.5% and above are most preferred.

The ink carrier for the colorants used in these ink compositions contain at least about 55% water and a polyhydric alcohol, the polyhydric alcohol preferably being present in an amount of at least about 15%, e.g., from about 20 to about 35%, these percentages being based on the weight of the ink composition. Among the suitable polyhydric alcohols are glycerol, ethylene glycol, diethylene glycol propylene glycol, butylene glycol, and the like. Preferably, the water and humectant are present in a ratio within the range of from about 4:1 to about 1:1 of water to humectant, and most preferably from about 3:1 to about 3:2.

Of high importance to achieving the results of the invention is the provision of a penetrant, typically an ether such as glycol ether selected from the group consisting of ethers based on ethylene glycol and ethers based on propylene glycol. The glycol ethers have multiple beneficial effects such as bridging between the water and other organic solvents, enhancing the color by internal hydrogen bonding, and improving penetration into the paper. However, some are also strong solvents that can damage key inkjet printer parts if used in excess. A preferred glycol ether is BTG, triethylene glycol mono butyl ether, which is preferably used in amounts of less than about 6% by weight of the ink, preferably in the range of from about 2 to about 5%. Among other suitable ethers that could be used are following: tripropylene glycol methyl ether, diethylene glycol n-butyl ether, diethylene glycol methyl ether and dipropylene glycol methyl ether dipropylene propyl ether.

Because the aqueous vehicle can develop air bubbles in a piezoelectric device, it is important to employ a surfactant, such as a nonionic or an ionic (e.g., anionic) surfactant. Among those suitable are Surfynol 465, which is a nonfoaming wetting agent. It is a nonionic, low-foaming surfactant that is utilized for its wetting and slight emulsification properties. It is miscible in water and has an HLB of about 13. Other surfactants with similar properties can be employed, including Surfynol 440, sodium salts of sulfated ethoxylated fatty alcohols (e.g., sodium polyoxyethylene lauryl ether sulfate), sodium alkylbenzenesulfonates (e.g., sodium dodecylbenzene sulfonate).

Water is desirable as the main solvent due to the large number of plastic materials used for ink jet printer parts. These parts include inker foam, glue, printer base, cartridge materials, wiper blade, etc. The above parts may be made from acrylonitrile styrene, polymethyl methacrylate and acrylonitrile butadiene styrene. Thus, a disadvantage of using only organic-based solvents is that they may attack the plastic materials and interfere with the proper functioning of the parts. It is essential according to the invention, however to employ the penetrant as noted above in effective amounts. Water may typically be present in an amount between about 55 and about 80 weight percent, although other suitable amounts may be employed.

The following examples are presented to further illustrate and explain the invention and should not be taken as limiting in any regard. Unless otherwise indicated, all parts and percentages are by weight.

### Examples

A series of inks were prepared according to the invention. The inks have the formulations indicated in the following Table

### Formulation

| **Material Name** | **CAS No.** | **Parts by weight in Ink** | | | |
|---|---|---|---|---|---|
| | | **1** | **2** | **3** | **4** |
| Super pure water | 7732-18-5 | 64.07 | 66.05 | 62.33 | 62.43 |
| Glycerol | 56-81-5 | 17.00 | 17.00 | 20.83 | 23.12 |
| Diethylene glycol | 111-46-6 | 8.00 | 8.00 | 8.00 | 8.00 |
| Triethylene glycol monobutyl | 143-22-6 | 5.00 | 5.00 | 5.00 | 2.50 |
| ether | | | | | |
| Proxel GXL, antimicrobial | mixed | 0.20 | 0.20 | 0.20 | 0.20 |
| 1,2,3-Benzotriazole | 95-14-7 | 0.10 | 0.10 | 0.10 | 0.10 |
| Anionic surfactant for | 69669-44-9 | 0.02 | 0.02 | 0.02 | - |
| penetration | | | | | |
| Anionic surfactant for | 68891-38-3 | 0.11 | 0.11 | - | - |
| head recovery from air bubble | | | | | |
| (1) | | | | | |
| Nonionic surfactant for | 9014-85-1 1 | - | - | - | 0.13 |
| head recovery from air bubble | | | | | |
| (2) | | | | | |
| Acid Blue 9 | 3844-45-9 | 3.00 | 1.70 | 1.70 | 1.70 |
| Acid Red 52 | 3520-42-1 | 2.00 | 1.12 | 1.12 | 1.12 |
| Black dye | Registered | 0.50 | 0.70 | 0.70 | 0.70 |
| Total | | 100.00 | 100.00 | 100.00 | 100.00 |

| **Physical Properties** | | | | | |
|---|---|---|---|---|---|
| Property | | 1 | 2 | 3 | 4 |
| Viscosity | mPa.s | 3.3 | 3.0 | 3.5 | 3.3 |
| Surface Tension | mN/m | 34.2 | 34.6 | 34.5 | 37.5 |
| pH | - | 7.6 | 5.2 | 5.2 | 7.7 |
| Conductivity | mS/cm | 2.8 | 2.2 | 1.8 | 1.8 |
| Density | g/cm³ | 1.074 | 1.067 | 1.076 | 1.081 |
| | L* | 34 | 36 | 38 | 37 |
| Color Illumination: D65 | a* | 13 | 8 | 7 | 7 |
| | b* | -34 | -28 | -27 | -27 |

The above description is intended to enable the person skilled in the art to practice the invention. It is not intended to detail all of the possible modifications and variations, which will become apparent to the skilled worker upon reading the description. It is intended, however, that all such modifications and variations be included within the scope of the invention which is seen in the above description and otherwise defined by the following claims. The claims are meant to cover the indicated elements and steps in any arrangement or sequence which is effective to meet the objectives intended for the invention, unless the context specifically indicates the contrary.

## Claims

1. A blue ink for inkjet printing, comprising water soluble dyes, water and solvent, wherein:
the color of the ink (color illumination D65) is L*: 37±5, a*: 7±7, b*: -27±8, and the ink comprises
an aqueous vehicle including water and a humectant comprising a polyhydric alcohol,
a penetrant comprising a glycol ether,
a surfactant, and
Acid blue 9,
wherein the relative amounts of the aqueous vehicle, the penetrant, the surfactant and the Acid blue 9, are effective to provide an ink having a viscosity and surface tension effective for inkjet printing.

2. A blue ink according to claim 1, prepared for piezoelectric printing wherein the viscosity is within the range of from 2 to 4 mPa·s and the surface tension is within the range of from 30 to 50 mN/m.

3. A blue ink according to claim 1, wherein the color of the ink is defined as follows: L*:37±4, a*:7±2, b*:-27±3.

4. A blue ink according to claim 1, wherein the glycol ether is based on ethylene glycol or propylene glycol.

5. A blue ink according to claim 1, which further comprises a red dye and a black dye, with the ratio of blue to red to black dyes being within the ranges of from 100:40:20 to 100:75:60.

6. A blue ink according to claim 5, wherein the water and humectant are present in a ratio within the range of from 4:1 to 1:1 of water to humectant, and the penetrant is present in an amount of from 1 to 5% of the weight of the aqueous vehicle.

7. A blue ink according to claim 6, which comprises at least about 55% water and at least 15% polyhydric alcohol.

8. A blue ink according to claim 7, wherein the water and humectant are present in a ratio within the range of from 3:1 to 3:2.

9. A blue ink according to claim 8, wherein the humectant is present in an amount of from 20 to 35%.

10. A blue inkjet ink, **characterized by** a color of the ink (color illumination D65) of L*:37±5, a*:7±7, b*:-27±8, and suitable for piezoelectric inkjet printing, comprising: an aqueous vehicle including water and a humectant comprising a polyhydric alcohol, a glycol ether penetrant, surfactant, a blue dye, a red dye and a black dye, with the ratio of blue to red to black dyes being within the ranges of from 100:40:20 to 100:75:60, and wherein the relative amounts of the aqueous vehicle, the penetrant, the surfactant and the blue dye, are effective to provide an ink having a viscosity and surface tension effective for inkjet printing.

11. A blue ink according to claim 10, prepared for piezoelectric printing wherein the viscosity is within the range of from 2 to 4 mPa·s and the surface tension is within the range of from 30 to 50 mN/m.

12. A blue ink according to claim 10, wherein the color of the ink is defined as follows: L*:37±4, a*:7±2, b*:-27±3.

13. A blue ink according to claim 10, wherein the water and humectant are present in a ratio within the range of from 4:1 to 1:1 of water to humectant, and the penetrant is present in an amount of from 1 to 5% of the weight of the aqueous vehicle.

14. A blue ink according to claim 13, which comprises at least about 55% water and at least 15% polyhydric alcohol.

15. A blue ink according to claim 13, wherein the water and humectant are present in a ratio within the range of from 3:1 to 3:2.

16. A blue ink according to claim 15, wherein the humectant is present in an amount of from 20 to 35%.

17. A process for printing an image having visible, blue comprising: providing a piezoelectric inkjet printer with an ink as described in any of claims 1-16, and printing an image with the ink on a substrate.

18. A printed image prepared by the process of claim 17.
